# EUROPEAN PATENT APPLICATION

(11) **EP 3 168 118 A1**
(43) Date of publication of application: **17.05.2017**
(21) Application number: 16197350.8
(22) Date of filing: 04.11.2016
(51) Int. Cl.: B62D 29/00, B60K 11/08, B62D 25/08

(54) **RADIATOR SUPPORT MEMBER**

(30) Priority: 09.11.2015 JP 2015219398
(71) Applicant: AISIN SEIKI KABUSHIKI KAISHA, Kariya-shi Aichi-ken 448-8650 (JP)
(72) Inventor: KANEKO, Takanobu, Kariya-shi, Aichi-ken 448-8650 (JP); KITA, Kiyoichi, Imizu-shi, Toyama-ken 934-8588 (JP); SHOBO, Jun, Imizu-shi, Toyama-ken 934-8588 (JP); OBAYASHI, Tamaki, Imizu-shi, Toyama-ken 934-8588 (JP)
(74) Representative: Winter, Brandl, Fürniss, Hübner, Röss, Kaiser, Polte - Partnerschaft mbB

(57) **Abstract**

A radiator support member (20) includes; a pair of vertical beam portions (211, 212) respectively extending in a vehicle height direction along both side edge portions of a radiator body portion (10) of a vehicle; and a horizontal beam portion (213) extending in a vehicle width direction along an upper edge portion of the radiator body portion, in which the pair of vertical beam portions and the horizontal beam portion are integrally formed of a synthetic resin material, wherein a tubular member (22) extending in the vehicle width direction is attached to the horizontal beam portion, and both end portions of the tubular member in the vehicle width direction are fixed to a body portion of the vehicle.

## Description

### TECHNICAL FIELD

This disclosure relates to a radiator support member of a vehicle.

### BACKGROUND DISCUSSION

The radiator support member is known as disclosed in JP 2014-104825A (Reference 1). The radiator support member is formed in a frame shape surrounding a radiator body. The radiator support member is formed of a plurality of metal members.

A horizontal beam portion forming an upper side of the related-art radiator support member is formed to have a groove shape opening downward. Therefore, the torsional rigidity of the horizontal beam portion is not so high. There is also a case where a lock mechanism (hood lock) for holding a hood (bonnet) of the vehicle in a closed state is provided in the horizontal beam portion. In this case, it is necessary to set the bending rigidity of the horizontal beam portion to be high.

### SUMMARY

Thus, a need exists for a radiator support member with a light weight and high rigidity. In the following description of respective components of this disclosure, symbols corresponding to portions of embodiments are shown in parentheses for making this disclosure easy to understand, however, respective components of this disclosure should not be interpreted limitedly to structures corresponding to portions shown by symbols of the embodiments.

A feature of a radiator support member according to an aspect of this disclosure resides in that the radiator support member includes a pair of vertical beam portions respectively extending in a vehicle height direction along both side edge portions of a radiator body portion and a horizontal beam portion extending in a vehicle width direction along an upper edge portion of the radiator body portion, in which the pair of vertical beam portions and the horizontal beam portion are integrally formed of a synthetic resin material, in which a tubular member extending in the vehicle width direction is attached to the horizontal beam portion, and both end portions of the tubular member in the vehicle width direction are fixed to a body portion of the vehicle.

According to the aspect of this disclosure, the pair of vertical beam portions and the horizontal beam portion are formed of the synthetic resin material, and the horizontal beam portion is reinforced by the tubular member made of metal. Therefore, the weight can be reduced and the rigidity can be kept high as compared with a case where the pair of vertical beam portions and the horizon beam portion are made of metal. Moreover, as the horizontal beam portion of the radiator support member of this disclosure is reinforced by the tubular member, the rigidity is higher than the horizontal beam portion formed in the groove shape opening downward such as in the related-art radiator support member.

Another feature of the aspect of this disclosure resides in that the tubular member is positioned in a front side of an upper end portion of the radiator body portion.

According to this configuration, the dimension of the vehicle radiator device in the vehicle height direction can be reduced as compared with a case where the tubular member is positioned above the radiator body portion.

Another feature of the aspect of this disclosure resides in that a reinforcing member extending in the vehicle width direction is attached to an attachment portion of the tubular member in the horizontal beam portion or attached to the tubular member.

In this case, it is preferable that the reinforcing member is a carbon-fiber reinforced plastic material, and the reinforcing member is attached under the tubular member.

Furthermore, in this case, it is preferable that the reinforcing member is attached to the attachment portion or the central portion of the tubular member in the vehicle width direction.

According to this configuration, the rigidity of the horizontal beam portion can be further increased. Therefore, for example, even when a relatively larger load is added to the horizontal beam portion through the hood lock at the time of opening/closing the hood, deformation of the horizontal beam portion can be suppressed.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view showing a structure of a front part of a vehicle to which a vehicle radiator device disclosed here is applied;
Fig. 2 is an exploded perspective view of the vehicle radiator device of Fig. 1;
Fig. 3 is an exploded perspective view of a radiator support member;
Fig. 4 is a cross-sectional view showing a cross section of a horizontal beam portion of the radiator support member vertical to a vehicle width direction;
Fig. 5 is a cross sectional view showing a cross section of the front part of the vehicle to which the vehicle radiator device disclosed here is applied, which is obtained by cutting the central portion in the vehicle width direction vertically to the vehicle width direction;
Fig. 6 is a cross sectional view showing a cross section of the front part of the vehicle to which the vehicle radiator device disclosed here is applied, which is obtained by cutting a left end portion of a radiator body portion in the vehicle width direction vertically to the vehicle width direction;
Fig. 7 is a perspective view of a grille shutter portion; and
Fig. 8 is a perspective view of an air guide plate.

### DETAILED DESCRIPTION

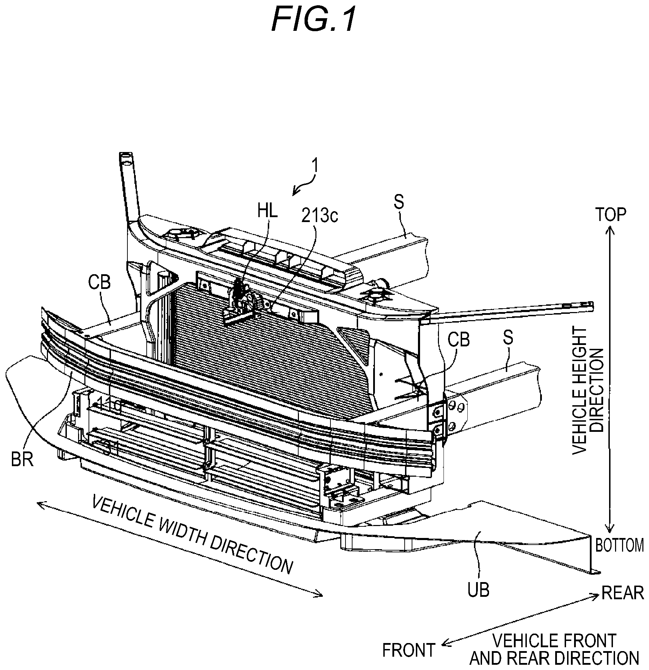

Hereinafter, a vehicle radiator device 1 according to an embodiment disclosed here will be explained. First, a structure of a front end portion of a vehicle to which the vehicle radiation device 1 is applied will be briefly explained. As shown in Fig. 1, the vehicle includes a right and left pair of side members S, S extending in a front and rear direction of the vehicle. Shock absorbing members CB, CB are respectively attached to front end surfaces of the side members S, S. The shock absorbing members CB are formed in a cylindrical shape extending in the front and rear direction of the vehicle. A bumper reinforcement BR extending in a vehicle width direction is attached to front end surfaces of the shock absorbing members CB, CB. When an object collides with the front end of the vehicle, the shock due to the collision is absorbed by deformation of the shock absorbing members CB so as to be compressed in the vehicle front and rear direction. The vehicle radiator device 1 is arranged in a space surrounded by the bumper reinforcement BR, the shock absorbing members CB, CB and the side members S, S.

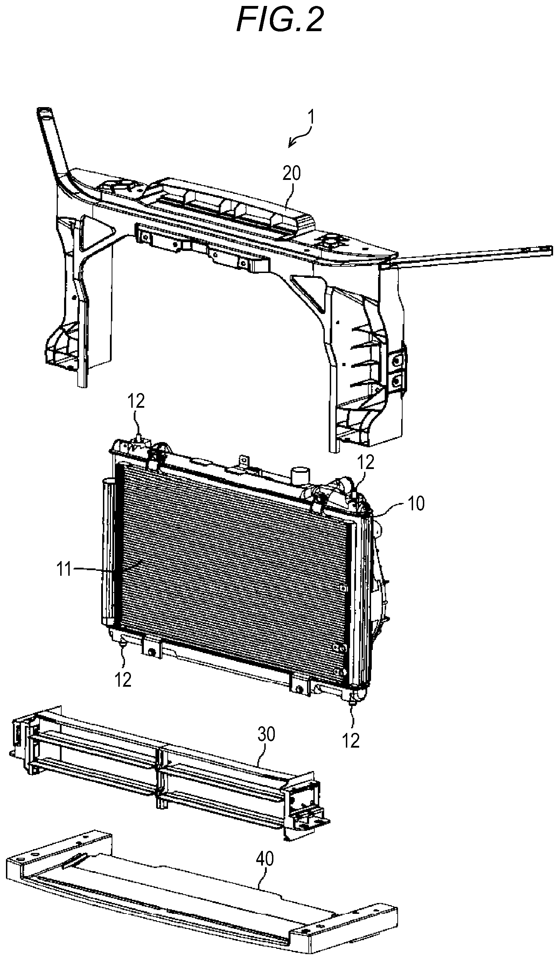

Next, the vehicle radiator device 1 will be specifically explained. The vehicle radiator device 1 includes a radiator body portion 10, a radiator support member 20, a grille shutter portion 30 and an air guide plate 40 as shown in Fig. 2.

A structure of the radiator body portion 10 is the same as that of a known radiator body portion. Namely, the radiator body portion 10 is connected to a flow path for cooling water provided in an engine, which cools the cooling water having a high temperature after passing through the engine. That is, the radiator body portion 10 has fins 11 for radiating heat of the cooling water. Moreover, bush portions 12 respectively protruding upward and downward are respectively formed on an upper end surface and a lower end surface of the radiator body portion 10.

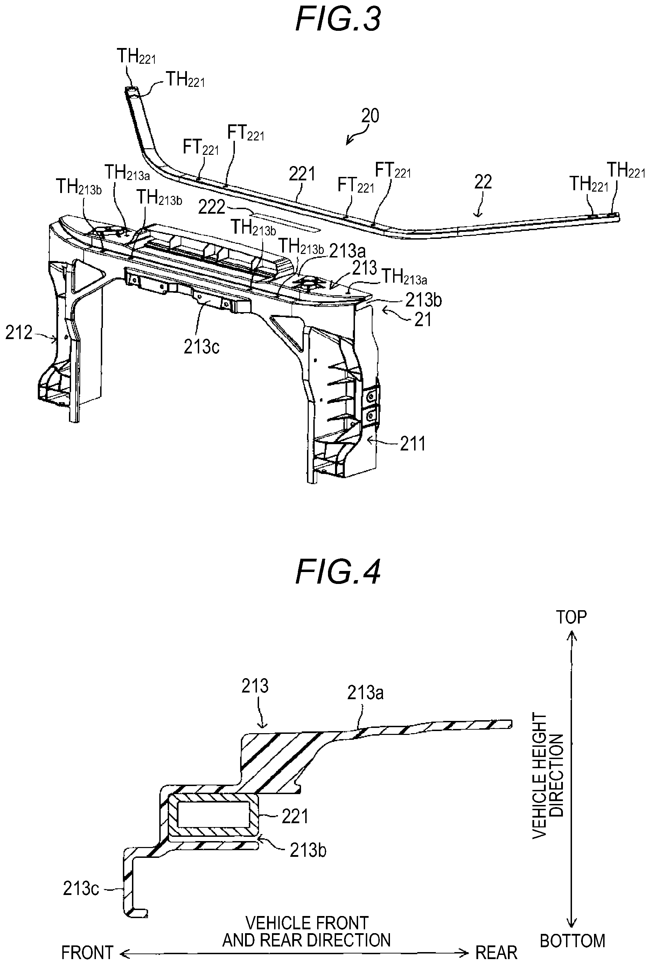

The radiator support member 20 includes a body portion 21 and a reinforcing portion 22 as shown in Fig. 3. The body portion 21 includes a right and left pair of vertical beam portions 211, 212 extending in a vehicle height direction and a horizontal beam portion 213 connecting between upper ends of the vertical beam portions 211, 212. The vertical beam portions 211, 212 and the horizontal beam portion 213 are integrally formed of a synthetic resin material.

The vertical beam portions 211, 212 are extended along right and left both side edge portions of the radiator body portion 10. The vertical beam portions 211, 212 are formed in a box shape opening to the front direction and plural reinforcing ribs are provided inside the vertical beam portions 211, 212.

The horizontal beam portion 213 is extended in the vehicle width direction. That is, the horizontal beam portion 213 is extended along an upper edge portion of the radiator body portion 10. A cross section vertical to the vehicle width direction of the horizontal beam portion 213 have a stepped shape as shown in Fig. 4. The horizontal beam portion 213 includes a base 213a, a groove portion 213b and a protruding portion 213c.

The base 213a extends in the vehicle width direction and formed in a plate shape vertical to the vehicle height direction. The plate thickness of a front end portion of the base 213a is larger than the thickness of a rear end portion.

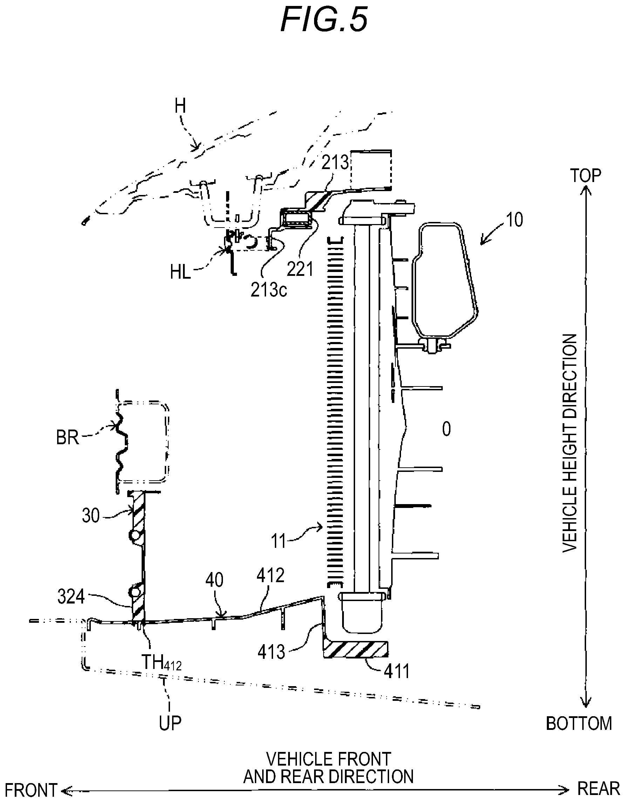

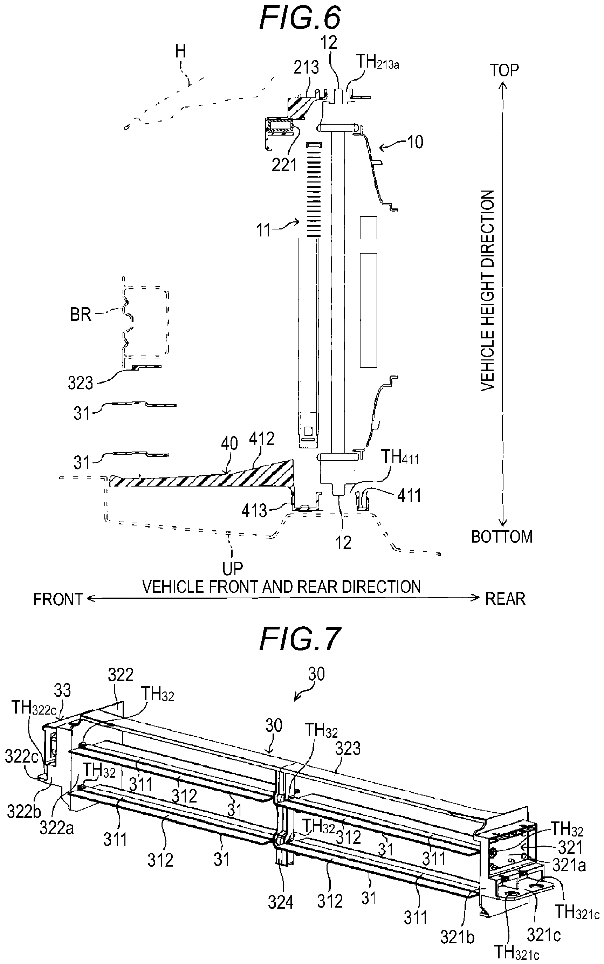

The groove portion 213b is connected to a lower end portion in an end portion on the front side of the base 213a, which is positioned at a forward and lower position of the base 213a. The groove portion 213b opens to the rear. The groove portion 213b is positioned on the front side of the upper edge portion of the radiator body portion 10 in a state where the radiator body portion 10 is supported by the radiator support member 20 (see Fig. 5 and Fig. 6). The later-described reinforcing portion 22 is inserted and fixed to the groove portion 213b.

The protruding portion 213c is connected to a front end portion of the groove portion 213b, which is positioned at a forward and lower position of the groove portion 213b. A hood lock HL for locking a front end of a hood H of the vehicle is assembled to a front surface of the protruding portion 213c (see Fig. 1 and Fig. 5). Through holes TH₂₁₃ₐ penetrating in the vehicle height direction are formed at right and left ends of base 213a (see Fig. 3 and Fig. 6). The through holes TH₂₁₃ₐ correspond to the bush portions 12. Two sets of through holes TH_{213b} penetrating the inside of the groove portion 213b from an upper surface thereof are respectively formed at a left end portion and a right end portion of the groove portion 213b (see Fig. 3). Bolts for fixing the later-described reinforcing portion 22 are inserted into the through holes TH_{213b}.

The reinforcing portion 22 includes a tubular portion 221 and a reinforcing sheet 222 (see Fig. 3). The tubular portion 221 is formed in a rectangular tubular shape extending in the vehicle width direction. The tubular portion 221 is longer than the horizontal beam portion 213 of the radiator support member 20. The tubular portion 221 protrudes in left and right directions from the body portion 21 in a state of being fixed to the groove portion 213b. The central portion of the tubular portion 221 in a longitudinal direction is parallel to the vehicle width direction. In a state where the reinforcing portion 22 is fixed to the groove portion 213b in an intermediate portion of the tubular portion 221 in the longitudinal direction, portions positioned in a left end portion and a right end portion of the body portion 21 respectively bend rearward. End portions of the tubular portion 221, namely, right and left protruding portions protruding from the body portion 21 are respectively extended linearly and obliquely rearward. Through holes TH₂₂₁ penetrating in the vehicle height direction are respectively formed at tip end portions (a left end portion and a right end portion) of these protruding portions. Bolts for fixing the vehicle radiator device 1 to the body portion of the vehicle are inserted into the through holes TH₂₂₁. Furthermore, female threads FT₂₂₁ are formed on wall portions on the upper side of the central portion (portion formed in parallel to the vehicle width direction) of the tubular portion 221 in the longitudinal direction. The female threads FT₂₂₁ correspond to the through holes TH_{213b}.

The tubular portion 221 is formed by the following process. First, extrusion process is performed to a metal material (for example, an aluminum alloy material) to form a rectangular tube extending in a straight line. Then, bending process is performed so that the intermediate portions of the rectangular tube in the longitudinal direction (portions respectively positioned in the left end portion and the right end portions of the body portion 21) bend rearward. Next, the through holes TH₂₂₁ and the female threads FT₂₂₁ are formed. The tubular portion 221 is formed in this manner.

The reinforcing sheet 222 is formed of a carbon-fiber reinforced plastic material (CFRP). The reinforcing sheet 222 is formed in a sheet shape extending in the vehicle width direction as well as vertical to the vehicle height direction. The reinforcing sheet 222 is adhered to a lower surface in the central part of the tubular portion 221 in the vehicle width direction.

The reinforcing portion 22 is fixed to the groove portion 213b by the following process. First, the reinforcing portion 22 is inserted into the groove portion 213b. Then, bolts are inserted into the through holes TH_{213b}, and tip portions thereof are fixed to the female threads FT₂₂₁. The reinforcing portion 22 is fixed to the groove portion 213b in this manner.

The grille shutter portion 30 is positioned in a grille opening of the vehicle in a state where the vehicle radiator device 1 is assembled to the vehicle, adjusting the amount of air taken in from the grille opening to an engine room and flowing toward the radiator body portion 10. The grille shutter portion 30 includes plural (for example, four) shutter members 31, a shutter support member 32 supporting the shutter members 31 and a drive unit 33 driving the shutter members 31 as shown in Fig. 7.

Each shutter member 31 includes a shaft portion 311 and a plate portion 312. The shaft portion 311 is formed in a bar shape extending in the vehicle width direction. The plate portion 312 is formed in a plate shape extending in the vehicle width direction. The shaft portion 311 is provided in the central portion of the plate portion 312 in the width direction (direction vertical to the vehicle width direction and the plate thickness direction).

The shutter support member 32 includes a right and left pair of side frame portions 321, 322 extending in the vehicle height direction, an upper frame portion 323 connecting between upper end portions of the side frame portions 321, 322 and a reinforcing portion 324 supporting the central portion of the upper frame portion 323. The side frame portion 321 is formed in a box shape opening to the left. That is, the side frame portion 321 includes a bottom wall portion 321 a vertical to the vehicle width direction and a peripheral wall portion 321 b surrounding the periphery of the bottom wall portion 321 a. The side frame portion 321 further includes a plate-shaped bracket portion 321 c extended to the left direction from the bottom wall portion 321 a and is vertical to the vehicle height direction. Through holes TH_{321c} penetrating in the vehicle height direction are formed in the bracket 321 c. The side frame portion 322 has a right-and-left symmetrical shape with respect to the side frame portion 321. That is, the side frame portion 322 includes a bottom wall portion 322a, a peripheral wall portion 322b and a bracket portion 322c in the same manner as the side frame portion 321. Through hole TH_{322b} are formed in the bracket portion 322c. The upper frame portion 323 is formed to have a plate shape extending in the vehicle width direction and vertical to the vehicle height direction. The reinforcing portion 324 is formed in a pillar shape extending downward from the central portion in the vehicle width direction of the upper frame portion 323. The side frame portions 321, 322, the upper frame portion 323 and the reinforcing portion 324 are integrally formed of a synthetic resin material.

The drive unit 33 includes a drive shaft rotatable around the central axis line extending in the vehicle width direction. The drive unit 33 includes a motor (for example, a stepping motor) which can adjust a rotation angle of the drive shaft. The drive unit 33 is assembled to a right surface of the bottom wall portion 322a of the side frame portion 322.

Two sets of through holes TH₃₂ penetrating in the vehicle width direction are respectively formed in the side frame portions 321, 322 and the reinforcing portion 324. The first two through holes TH₃₂ are apart from each other in the vehicle height direction. The shaft portions 311 of the shutter members 31 are inserted into the through holes TH₃₂. Accordingly, the shutter member 31 is supported rotatably around the central axis line of the through hole TH₃₂. The two shutter members 31, 31 are supported between the side frame portion 321 and the reinforcing portion 324, and the other two shutter members 31, 31 are supported between the side frame portion 322 and the reinforcing portion 324. The shaft portions 311, 311 of the right-side shutter members 31, 31 are connected to the drive shaft of the drive unit 33. The shaft portions 311, 311 of the left-side shutter members 31, 31 are coupled to the shaft portions 311, 311 of the right-side shutter members 31, 31 through not-shown coupling members. When the drive shaft of the drive unit 33 rotates, respective shutter members 31 rotate around the central axis lines of the shaft portions 311. Directions of all the shutter members 31 are the same. The amount of air taken in from the grille opening into the engine room can be adjusted by adjusting the rotation angles of the shutter members 31.

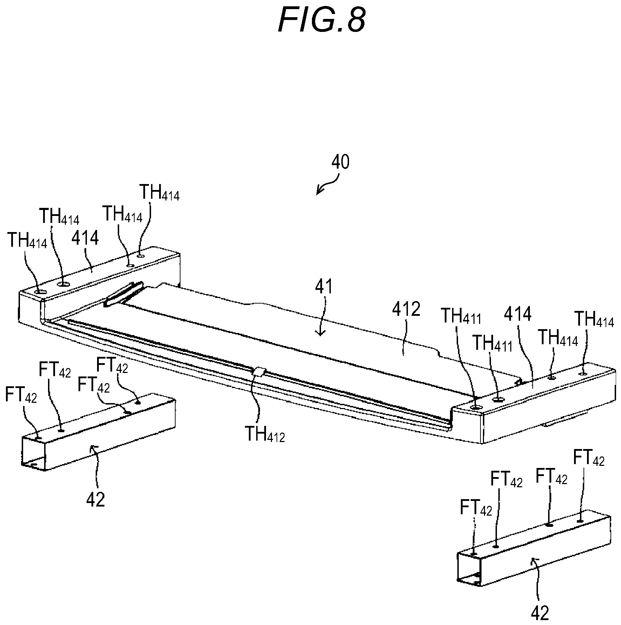

The air guide plate 40 includes a plate-shaped portion 41 and shock absorbing members 42, 42 as shown in Fig. 8. The plate-shaped portion 41 includes a base end portion 411, a body portion 412, a connecting portion 413, retaining portions 414, 414 (see Fig. 5 and Fig. 6).

The base end portion 411 is formed in a plate shape extending in the vehicle width direction at a rear end of the plate-shaped portion 41 and is vertical to the vehicle height direction. A through hole TH₄₁₁ penetrating in the vehicle height direction is formed in the base end portion 411 (see Fig. 6). The through hole TH₄₁₁ corresponds to the bush portion 12.

The body portion 412 is positioned at a forward and upper position of the base end portion 411. The body portion 412 is formed in a plate shape extending in the vehicle width direction and the vehicle front and rear direction. A front end portion of the body portion 412 is formed in a plate shape vertical to the vehicle height direction. A portion extending from the central portion in the vehicle front and rear direction of the body portion 412 to the rear end bends upward. A through hole TH₄₁₂ penetrating in the vehicle height direction is formed at a front end of the body portion 412. The through hole TH₄₁₂ is positioned at the central portion in the vehicle width direction. Furthermore, plural reinforcing ribs are formed on a lower surface of the body portion 412.

The connecting portion 413 is formed in a plate shape extending in the vehicle width direction and vertical to the vehicle front and rear direction. An upper end of the connecting portion 413 is connected to a rear end of the body portion 412 and a lower end of the connecting portion 413 is connected to a front end of the base end portion 411.

The retaining portions 414, 414 are respectively connected to right and left end portions of the body portion 412 (see Fig. 8). Each retaining portion 414 is formed in a box shape which extends in the vehicle front and rear direction and opens downward. Four through holes TH₄₁₄ penetrating in the vehicle height direction are formed on an upper-side wall portion (upper bottom portion) of each retaining portion 414. These four through holes TH₄₁₄ are formed at intervals in the vehicle front and rear direction.

The shock absorbing members 42 are formed in a rectangular tubular shape extending in the vehicle front and rear direction. The shock absorbing members 42 are formed, for example, by performing extrusion process to a metal material (aluminum alloy material). Four female threads FT₄₂ respectively corresponding to the four through holes TH₄₁₄ are formed on an upper-side wall portion of each shock absorbing member 42. The shock absorbing members 42, 42 are inserted into the retaining portions 414, 414 from the lower direction of the retaining portions 414, 414. Then, bolts are inserted into the through holes TH₄₁₄ and tip ends of the bolts are fastened to the female threads FT₄₂, thereby fixing the shock absorbing members 42, 42 to the retaining portions 414, 414. At first, bolts are fastened only to rear-side two female threads FT₄₂ in the four female threads FT₄₂ of the shock absorbing member 42, and only a rear-side portion of the shock absorbing member 42 is fixed to the retaining portion 414. Then, bolts are fastened to remaining two female threads FT₄₂ and a front-side portion of the shock absorbing member 42 is fixed to the retaining portion 414 in an assembly process of the vehicle radiator device 1, which will be explained below.

Next, an assembly procedure of the vehicle radiator device 1 will be explained (see Fig. 2). First, the lower-side bush portions 12 of the radiator body portion 10 are inserted into the through hole TH₄₁₁ of the air guide plate 40 to place the radiator body portion 10 on an upper surface of the base end portion 411 of the air guide portion 40. Next, the radiator support member 20 is taken down from an upper direction of the radiator body portion 10, the upper-side bush portions 12 are inserted into the through holes TH₂₁₃ₐ of the radiator support member 20. Then, the lower ends of the vertical beam portion 211, 212 are assembled to the base end portion 411. In this state, the height of the rear end of the body portion 412 of the air guide plate 40 corresponds to the height of the lower end of the fins 11 of the radiator body portion 10. The air passing through the grille shutter portion 30 flows along the body portion 412. That is, the air taken into the engine room flows toward the fins 11. Next, the lower end portion of the reinforcing portion 324 of the grille shutter portion 30 is inserted into the through hole TH412 of the air guide plate 40 and the bracket portions 321c, 322c are arranged on upper surfaces of the retaining portions 414, 414. The through holes TH_{321c}, TH_{322c} of the bracket portions 321 c, 322c correspond to the front-side two through holes TH₄₁₄ of the retaining portions 414, 414 and the front-side two female threads FT₄₂ of the shock absorbing members 42. Bolts are inserted into the through holes TH_{321c}, TH_{322c} and the through holes TH₄₁₄ to be fastened to the female threads FT₄₂. Accordingly, the grille shutter portion 30 is fixed to the air guide plate 40 and the front portions of the shock absorbing members 42 are fixed to the air guide plate 40. The vehicle radiator device 1 is assembled as described above.

The vehicle radiator device 1 is inserted into the engine room from the lower direction of the engine room and assembled to the vehicle body portion. Specifically, both end portions of the reinforcing portion 22, the vertical beam portions 211, 212 and the retaining portions 414, 414 are fastened to members forming a skeleton of the vehicle (for example, the side members). Then, an under plate UP is assembled to a lower part of the vehicle radiator device 1 (see Fig. 1).

In the vehicle radiator device 1 formed as described above, the body portion 21 of the radiator support member 20 is formed of a synthetic resin material, and the horizontal beam portion 213 is reinforced by the reinforcing portion 22 made of metal. Therefore, the weight can be reduced as well as the rigidity can be kept high as compared with a case where the entire radiator support member is made of metal. In particular, the reinforcing portion 22 (the tubular portion 221) is formed in a tubular shape extending in the vehicle width direction, therefore, the torsional rigidity is higher than the horizontal beam portion formed in a groove shape opening to the lower direction such as in the related-art radiator support member. The reinforcing sheet 222 made of carbon-fiber reinforced plastic material is adhered to the lower surface of the central portion in the vehicle width direction. Accordingly, the rigidity (bending rigidity) with respect to the external force for pressing the central portion of the horizontal beam portion 213 in the vehicle width direction to the lower direction is high. Therefore, even when a relatively large load is added to the horizontal beam portion 213 through the hood lock HL at the time of opening/closing the hood H, the deformation of the horizontal beam portion 213 can be suppressed. Furthermore, the reinforcing portion 22 is positioned in the front direction of the upper end portion of the radiator body portion 10. Therefore, the dimension of the vehicle radiator device 1 in the vehicle height direction can be reduced as compared with a case where the reinforcing portion 22 is positioned above the radiator body portion 10.

The shutter support member 32 of the grille shutter portion 30 opens downward. That is, the lower frame portion in the related-art grille shutter portion is removed, and the lower end portions of the side frame portions 321, 322 are directly assembled to the air guide plate 40. Therefore, the grille opening can be substantially expanded for the lower frame portion as compared with the related-art grille shutter. Accordingly, the cooling performance of the radiator device can be improved. Additionally, the number of components can be reduced as compared with the related-art grille shutter portion.

The radiator support member 20 also opens downward in the same manner as the shutter support member 32, and the lower end portions of the vertical beam portions 211, 212 are directly assembled to the air guide plate 40. Therefore, the number of components can be reduced as compared with the case where the lower frame portion of the radiator support member 20 is separately provided.

As the air guide plate 40 has the shock absorbing members 42, much more shocks can be absorbed as compared with the vehicle only having the shock absorbing member CB. The shock absorbing members 42 are housed and fixed in the retaining portions 414 formed in the box shape. Therefore, bending with respect to the direction of the central axis line thereof is suppressed. In other words, the shock absorbing members 42 are deformed to be compressed in the direction of the central axis line. Accordingly, the shock is absorbed efficiently.

Moreover, the lower end portions of the side frame portions 321, 322 of the grille shutter portion 30 are assembled to the shock absorbing members 42, 42 having relatively high rigidity. Accordingly, the grille shutter 30 can be stably held.

Furthermore, the achievement of embodiments of this disclosure is not limited to the above embodiment and various alterations may occur within a scope not departing from the object of this disclosure.

For example, the reinforcing sheet 222 is adhered to the tubular portion 221 in the above embodiment, however, the tubular portion 221 and the reinforcing sheet 222 may be integrally formed with each other (for example, by insert molding). Not only the lower-side wall portion of the central portion of the tubular portion 221 in the vehicle width direction but also portions extending over a wider range may be reinforced by the reinforcing sheet 222. For example, portions extending over the whole circumference of the central portion of the tubular portion 221 in the vehicle width direction may be reinforced by the reinforcing sheet 222. The reinforcing sheet 222 may be formed by using other materials other than the carbon-fiber reinforced plastic material.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. A radiator support member (20) comprising;
a pair of vertical beam portions (211, 212) respectively extending in a vehicle height direction along both side edge portions of a radiator body portion (10) of a vehicle; and
a horizontal beam portion (213) extending in a vehicle width direction along an upper edge portion of the radiator body portion, in which the pair of vertical beam portions and the horizontal beam portion are integrally formed of a synthetic resin material,
wherein a tubular member (22) extending in the vehicle width direction is attached to the horizontal beam portion, and
both end portions of the tubular member in the vehicle width direction are fixed to a body portion of the vehicle.

2. The radiator support member according to claim 1,
wherein the tubular member is positioned in a front side of an upper end portion of the radiator body portion.

3. The radiator support member according to claim 1 or 2,
wherein a reinforcing member (222) extending in the vehicle width direction is attached to an attachment portion of the tubular member in the horizontal beam portion or attached to the tubular member.

4. The radiator support member according to claim 3,
wherein the reinforcing member is a carbon-fiber reinforced plastic material, and
the reinforcing member is arranged under the tubular portion.

5. The radiator support member according to claim 3 or 4,
wherein the reinforcing member is attached to the attachment portion or the central portion the tubular member in the vehicle width direction.
